# FASCICULE DE BREVET EUROPEEN

(11) **EP 1 245 447 B1**
(45) Date de publication et mention de la délivrance du brevet: **26.05.2004**
(21) Numéro de dépôt: 02290781.0
(22) Date de dépôt: 28.03.2002
(51) Int. Cl.: B60R 7/04, B60N 2/46

(54) **Dispositif comprenant une console centrale coulissante amovible**
Vorrichtung mit abnehmbarer Gleitzentralkonsole
Device comprising a releasable sliding central console

(30) Priorité: 30.03.2001 FR 0104355
(43) Date de publication de la demande: 02.10.2002
(73) Titulaire: Sai Automotive Allibert Industrie, 92735 Nanterre (FR); Renault s.a.s., 92100 Boulogne Billancourt (FR)
(72) Inventeur: Reant, Richard, c/o Sai Auto. Allibert Ind., 60110 Meru (FR); Morel, Jean-Pierre, c/o Sai Auto. Allibert Ind., 60110 Meru (FR); Carrencotte, Laurent, c/o Sai Auto. Allibert Ind., 60110 Meru (FR); Barre, Philippe, c/o Sai Auto. Allibert Ind., 60110 Meru (FR); Feyel, Marie-Claire, 78000 Versailles (FR); Marceau, Thierry, 92500 Rueil-Malmaison (FR); Phanhelleux, Jérome, 75015 Paris (FR)
(74) Mandataire: Lerner, François

(56) Documents cités:
- CA-A- 2 245 311
- DE-U- 29 611 382
- FR-A- 2 789 641
- US-A- 4 146 159

## Description

La présente invention concerne un dispositif pour habitacle de véhicule automobile comprenant une console centrale.

Un tel dispositif, destiné à être disposé entre les sièges, en particulier entre les sièges avant, sert notamment de rangement ou de support.

Le document CA-A-2 245 311 décrit un tel dispositif, comprenant outre la console centrale, un support destiné à être fixé à l'habitacle du véhicule et des moyens de guidage comprenant une première partie maintenue par rapport à la console centrale et une deuxième partie maintenue par rapport au support, lesdites parties étant destinées à coulisser relativement l'une par rapport à l'autre et définissant pour l'une un rail formant glissière et pour l'autre un chariot formant coulisseau. Toutefois, la console centrale n'est pas destinée à être retirée de l'habitacle du véhicule ce qui réduit sa fonctionalité.

FR-A-2 789 641 divulgue un dispositif selon le préambule de la revendication 1 et qui comprend donc en outre des moyens de liaison libérable. Lesdits moyens libèrent l'ensemble formé par la console et les moyens de guidage par rapport au plancher de l'habitacle.

Ainsi, la console peut non seulement coulisser mais également être retirée. Seul reste alors en place le support, constitué par le plancher du véhicule, de sorte que l'on ne risque d'abîmer ni le rail ni le chariot. De plus, on peut poser des objets ou se déplacer aisément dans la zone libérée par la console.

Toutefois, la robustesse du dispositif et la facilité de mise en place de la console pour la lier au support ne sont pas très satisfaisantes. Pour y remédier, conformément à l'invention l'ensemble présente les caractéristiques suivantes :
- le rail constitue la première partie des moyens de guidage et est disposé entre la console et le chariot qui constitue la deuxième partie des moyens de guidage,
- les moyens de liaison libérable sont disposés entre le chariot et le support et présentent une position active dans laquelle ils maintiennent par rapport au support le chariot et une position inactive dans laquelle ils libèrent par rapport au support l'ensemble formé par la console, le rail et le chariot,
- le support présente une forme en creux destinée à recevoir le chariot, et
- le dispositif comprend en outre un volet destiné à obturer le creux formé dans le support lorsque l'ensemble formé par la console, le rail et le chariot est à l'écart du support.

En disposant le chariot dans le support, on augmente le volume utile de la console centrale, le support pouvant en effet être avantageusement noyé dans une paroi de l'habitacle telle que le plancher.

De plus, le chariot peut être de plus grande épaisseur sans réduire le volume utile de la console centrale, ce qui permet d'augmenter la robustesse du dispositif et/ou la longueur de coulissement.

En outre, la forme en creux du support facilite la mise en place de la console en insérant le chariot dans ledit creux. Enfin, une fois recouvert par le volet, le support s'intègre parfaitement à l'habitacle.

Suivant une autre caractéristique avantageuse de l'invention visant à maintenir la console centrale dans une position donnée, l'invention propose que le dispositif comporte des moyens d'indexation en position comprenant :
- une nervure s'étendant le long du rail et présentant des ouvertures la traversant réparties sur sa longueur,
- une tige d'indexation liée au chariot et commandée par un actionneur électrique la déplaçant entre une position active dans laquelle elle s'insère dans les ouvertures de la nervure et une position inactive dans laquelle elle autorise le coulissement entre le chariot et le rail,
- un bouton de commande relié à l'actionneur et destiné à permettre à l'utilisateur d'autoriser ou d'interdire le coulissement de la console par rapport au support.

Cette solution est fiable, robuste, facile à utiliser, ne requiert quasiment aucun effort et permet de disposer la commande de façon ergonomique.

Une solution avantageuse proposée par l'invention pour lier de manière libérable la console au support consiste en ce que les moyens de liaison libérable comprennent :
- des pattes de retenue fixées à la deuxième partie des moyens de guidage,
- des logements ménagés dans le support et destinés à recevoir lesdites pattes de retenue,
- un pêne mobile entre une position inactive dans laquelle il ménage une ouverture d'accès aux logements et une position active dans laquelle il obture lesdits logements, afin de retenir lesdites pattes de retenue dans lesdits logements.

Cette solution simple et robuste assure un fonctionnement fiable.

Afin d'éviter une libération inopinée de la console et permettre de remettre en place aisément, l'invention propose que les moyens de liaison libérable comprennent des moyens de commande qui ne permettent la libération de la console par rapport au support que dans une position relative déterminée de ladite console par rapport audit support.

Ainsi, la position de la deuxième partie des moyens guidage par rapport à la console étant toujours la même, il suffira de positionner correctement la console pour engager ladite deuxième partie des moyens de guidage dans le support.

Afin d'améliorer encore le fonctionnement du dispositif, l'invention propose que le rail soit réalisé en alliage d'aluminium. Ainsi, il sera relativement léger, pourra intégrer des éléments de renforcement tels que des nervures et présenter une faible dispersion de cotes sans surcoût important.

L'invention va apparaître encore plus clairement dans la description qui va suivre, faite en référence aux dessins annexés dans lesquels :
- la figure 1 représente en perspective éclatée un dispositif conforme à l'invention,
- la figure 2 représente le dispositif de la figure 1 en coupe suivant le plan transversal repéré II-II à la figure 3,
- la figure 3 représente, en coupe suivant le plan repéré III-III à la figure 2, le dispositif conforme à l'invention avec la console centrale en position avancée,
- la figure 4 représente de manière similaire à la figure 3, le dispositif conforme à l'invention avec la console centrale en position reculée,
- la figure 5 représente de manière similaire à la figure 3, le dispositif conforme à l'invention avec la console centrale retirée.

Tel qu'illustré, le dispositif 1 de l'invention comprend essentiellement une console centrale 2, des moyens de guidage 4 et un support 10 disposés dans l'habitacle 5 d'un véhicule automobile et destinés à être fixés au plancher 3 dudit véhicule. Les moyens de guidage comprennent un rail 6 et un chariot 8, autrement dit de manière générique respectivement une glissière 6 et un coulisseau 8.

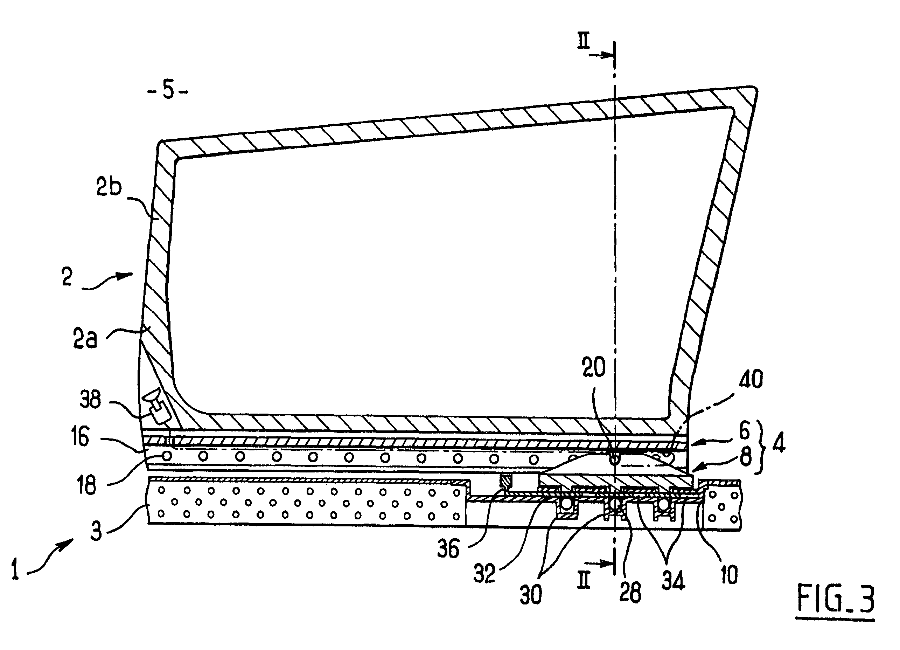

Le rail 6 et le chariot 8 forment ici un ensemble indémontable. Le rail 6 présente deux rainures longitudinales 12a, 12b s'étendant le long de ses extrémités latérales dans chacune desquelles roulent des galets 14 liés au chariot 8 par l'intermédiaire de roulements, ici des roulements à aiguilles 15. Afin d'immobiliser le chariot 8 par rapport au rail 6, ledit rail 6 présente une nervure longitudinale 16 percée d'une succession de trous transversaux 18 destinés à recevoir une tige de blocage (tige d'indexation) 20 dont le mouvement est commandé par un actionneur électrique 22. Pour faciliter la compréhension des figures 3 à 5, l'actionneur 22 n'a pas été représenté sur ces figures.

Le rail 6, avantageusement en alliage d'aluminium profilé, s'étend sensiblement sur toute la longueur de la console et est fixé sous elle par l'intermédiaire de vis 24. Le chariot 8 est quant à lui destiné à être reçu dans le creux formé par le support 10. Il est lié audit support de manière amovible par l'intermédiaire de pattes 26, ici au nombre de six. En effet, les pattes de retenue 26 du chariot sont terminées par des excroissances tubulaires 28 maintenues par une plaque de verrouillage 32 formant pêne dans des logements 30 ménagés dans le support 10.

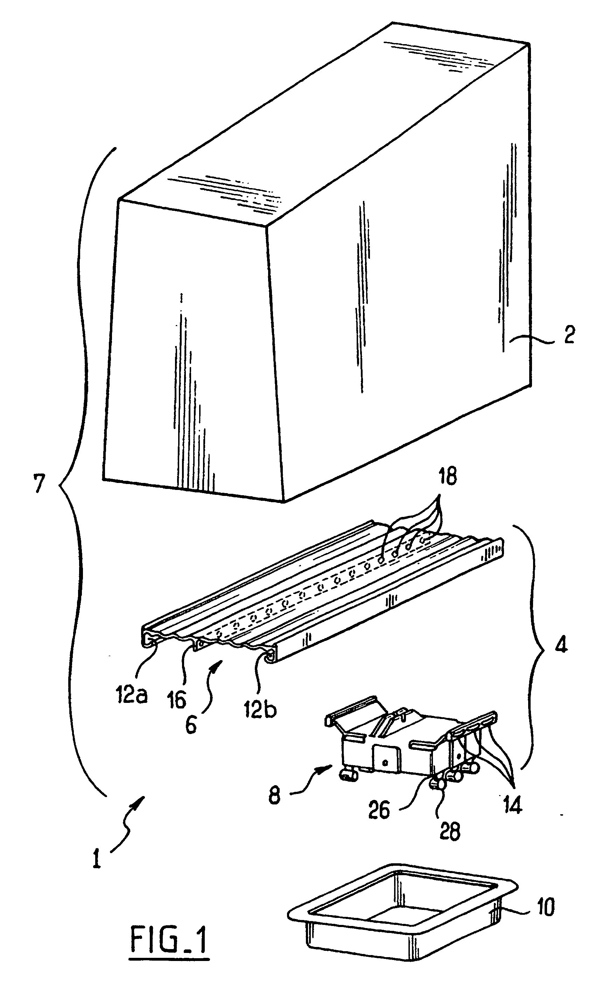

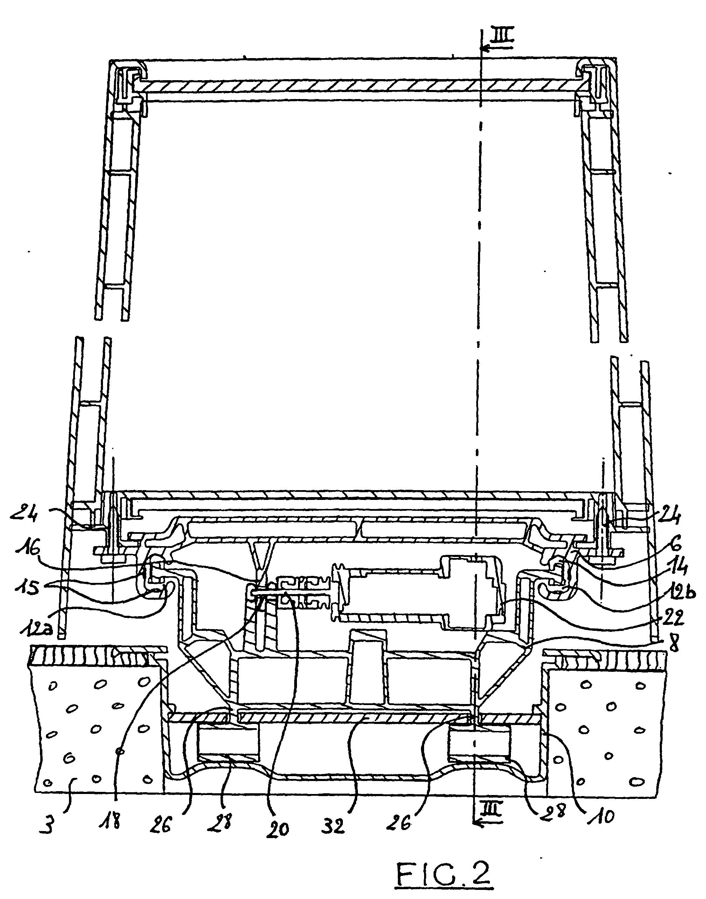

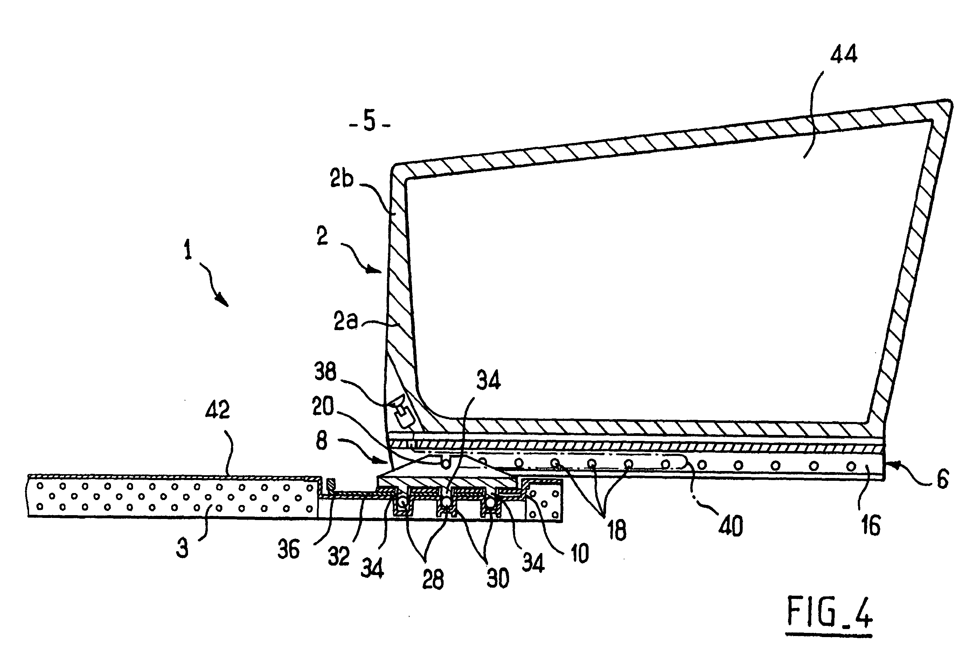

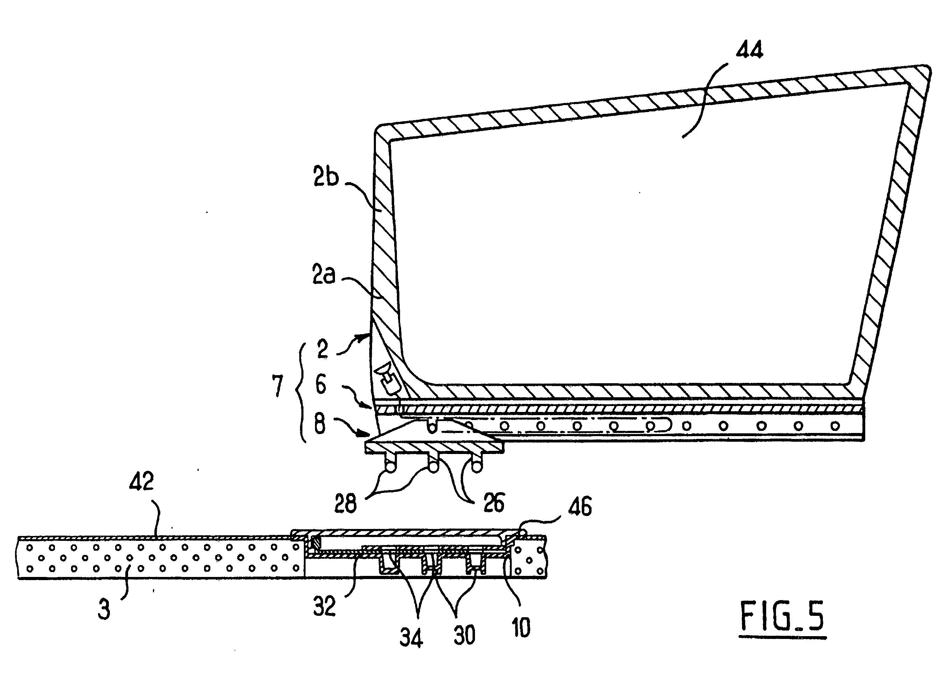

La plaque de verrouillage 32 présente des ouvertures 34 de section sensiblement similaire à celle des logements 30 et coulisse par rapport au support 10 entre une position active illustrée aux figures 1 à 3 et une position inactive (escamotée). En position active de la plaque de verrouillage 32, tel qu'illustré aux figures 1 à 3, les ouvertures 34 sont décalées par rapport aux logements 30, de sorte que la plaque 32 obture les logements 30. En revanche, lorsque le pêne de verrouillage 32 est en position inactive, tel qu'illustré aux figures 4 et 5, les ouvertures 34 sont disposées en regard des logements 30 libérant ainsi les excroissances 28 et par conséquent l'ensemble 7 formé par la console 2, le rail 6 et le chariot 8 (figure 5).

Le déplacement de la plaque de verrouillage 32 entre sa position active et sa position inactive est commandé par l'intermédiaire de moyens de commande sous forme d'une tirette 36. Lorsque la console 2 est en position avancée, tel qu'illustré à la figure 3, la tirette 36, disposée à l'intérieur du logement 10, est dissimulée sous le rail 6 et la console 2, de sorte que ladite console 2 ne peut être séparée du support 10. En revanche, en faisant coulisser la console 2 en position extrême arrière, illustré à la figure 4, l'utilisateur a accès à cette tirette 36.

Pour faire coulisser la console 2, l'utilisateur actionne un bouton de commande 38 qui alimente électriquement l'actionneur 22 par l'intermédiaire d'une nappe électriquement conductrice 40 (illustrée en trait mixte) repliée sur elle-même afin de suivre le déplacement relatif entre la console sur laquelle le bouton de commande 38 est fixé et le chariot 8 sur lequel l'actionneur 22 est fixé. L'actionneur 22 provoque alors le recul de la tige de blocage 20. Après avoir placé la console dans la position désirée, l'utilisateur relâche le bouton de commande 38 et la tige de blocage 20 vient s'insérer dans l'un des trous 18 du rail 6.

Le dispositif comprend en outre un volet 46 destiné à recouvrir le support 10 lorsque l'ensemble 7 formé par la console et les moyens de guidage 4 sont retirés, tel qu'illustré à la figure 5. Le plancher 3 est alors sensiblement plat, le dessus du volet se trouvant sensiblement au même niveau que le revêtement 42 du plancher.

Le chariot 8 est avantageusement réalisé en matériau plastique présentant de bonnes qualités mécaniques tel que de l'acrylonitrile butadiène styrène (ABS) ou du polyamide (PA) ou en matière métallique.

Le chariot 8 présente généralement une longueur d'environ 10 à 15 centimètres et une longueur de guidage procuré par les galets 14 d'environ 10 à 15 centimètres. Le rail 6 a quant à lui une longueur d'environ 40 à 60 centimètres, de même que la console centrale 2.

Bien entendu, l'invention n'est nullement limitée à la réalisation qui vient d'être décrite à titre d'exemple non limitatif.

## Revendications

1. Dispositif (1) en particulier pour habitacle (5) de véhicule automobile, comprenant :
- une console centrale (2),
- un support (10) destiné à être fixé à l'habitacle (5) du véhicule,
- des moyens de guidage (4) comprenant une première partie maintenue par rapport à la console centrale (2) et une deuxième partie maintenue par rapport au support (10), lesdites parties étant destinées à coulisser relativement l'une par rapport à l'autre et définissant pour l'une un rail (6) et pour l'autre un chariot (8),
- des moyens de liaison libérable (26, 28, 30, 32, 34, 36),
ledit dispositif étant **caractérisé en ce que** :
- le rail (6) constitue la première partie des moyens de guidage (4) et est disposé entre la console (2) et le chariot (8) qui constitue la deuxième partie des moyens de guidage (4),
- les moyens de liaison libérable (26, 28, 30, 32, 34, 36) sont disposés entre le chariot (8) et le support (10) et présentent une position active dans laquelle ils maintiennent par rapport au support (10) le chariot (8) et une position inactive dans laquelle ils libèrent par rapport au support (10) l'ensemble (7) formé par la console (2), le rail (6) et le chariot (8),
- le support (10) présente une forme en creux destinée à recevoir le chariot (8), et
- le dispositif comprend en outre un volet (46) destiné à obturer le creux formé dans le support (10) lorsque l'ensemble (7) formé par la console (2), le rail (6) et le chariot (8) est à l'écart du support (10).

2. Dispositif selon la revendication 1, **caractérisé en ce qu'**il comporte des moyens d'indexation en position pour immobiliser la console (2) comprenant :
- une nervure (16) s'étendant le long du rail et présentant des ouvertures (18) la traversant réparties sur sa longueur,
- une tige d'indexation (20) liée au chariot (8) et commandée par un actionneur électrique (22) la déplaçant entre une position active dans laquelle elle s'insère dans les ouvertures (18) de la nervure (16) et une position inactive dans laquelle elle autorise le coulissement entre le chariot (8) et le rail (6),
- un bouton de commande (38) relié à l'actionneur (22) et destiné à permettre à l'utilisateur d'autoriser ou d'interdire le coulissement de la console (2) par rapport au support (10).

3. Dispositif selon la revendication 1 ou la revendication 2, **caractérisé en ce que** les moyens de liaison libérable comprennent :
- des pattes de retenue (26, 28) fixées au chariot (8),
- des logements (30) ménagés dans le support (10) et destinés à recevoir lesdites pattes de retenue (26,28),
- un pêne (32) mobile entre une position inactive dans laquelle il ménage une ouverture d'accès aux logements (30) et une position active dans laquelle il obture lesdits logements (30), afin de retenir lesdites pattes de retenue (26, 28) dans lesdits logements (30).

4. Dispositif selon l'une quelconque des revendications précédentes, **caractérisé en ce que** les moyens de liaison libérable comprennent des moyens de commande (36) qui ne permettent la libération de la console (2) par rapport au support (10) que dans une position relative déterminée de ladite console (2) par rapport audit support (10).

5. Dispositif selon la revendication 4, **caractérisé en ce que** les moyens de commande (36) de la liaison libérable comprennent une tirette (36) disposée sous la console (2) lorsque ladite console (2) est fixée au support (10), de sorte que ladite tirette (36) ne soit accessible qu'en position de coulissement extrême de la console (2).

6. Dispositif selon l'une quelconque des revendications précédentes, **caractérisé en ce que** le rail (4) est réalisé en aluminium.

7. Dispositif selon l'une quelconque des revendications précédentes, **caractérisé en ce que** le rail (6) comprend deux rainures longitudinales (12a, 12b) et le chariot (8) comprend des galets (14) disposés à l'intérieur de chaque rainure longitudinale (12a, 12b).

## Patentansprüche

1. Vorrichtung (1) insbesondere für den Innenraum (5) eines Kraftfahrzeugs, bestehend aus:
- einer Mittelkonsole (2),
- einer Halterung (10), die zur Befestigung in dem Innenraum des Fahrzeugs dient,
- Führungsmitteln (4) bestehend aus einem ersten Teil, das an der Mittelkonsole (2) gehalten ist und einem zweiten Teil, das an der Halterung (10) gehalten ist, wobei die Teile so ausgebildet sind, dass das eine gegenüber dem anderen gleitet und bei einem eine Schiene (6) und beim anderen einen Wagen (8) definiert,
- Mitteln zur lösbaren Verbindung (26, 28, 30, 32, 34, 36),
wobei die Vorrichtung **dadurch gekennzeichnet ist, dass**:
- die Schiene (6) das erste Teil der Führungsmittel (4) bildet und zwischen der Konsole (2) und dem Wagen (8), der das zweite Teil der Führungsmittel (4) bildet, angeordnet ist,
- die Mittel zur lösbaren Verbindung (26, 28, 30, 32, 34, 36) zwischen dem Wagen (8) und der Halterung (10) angeordnet sind und eine aktive Position, in der sie den Wagen (8) an der Halterung (10) halten und eine inaktive Position, in der sie die Baugruppe (7), gebildet aus der Konsole (2), der Schiene (6) und dem Wagen (8) gegenüber der Halterung (10) freigeben, bieten,
- die Halterung (10) eine Hohlform darstellt, die den Wagen (8) aufnimmt, und
- die Vorrichtung außerdem eine Klappe (46) besitzt, die den Hohlraum, der in der Halterung (10) gebildet ist, abdecken soll, wenn die Baugruppe (7), die aus der Konsole (2), der Schiene (6) und dem Wagen (8) gebildet wird, außer Eingriff mit der Halterung (10) ist.

2. Vorrichtung nach Anspruch 1, **dadurch gekennzeichnet, dass** sie Verriegelungsmittel an Ort und Stelle zum Festsetzen der Konsole (2) besitzt, bestehend aus:
- einer Rippe (16), die sich entlang der Schiene (6) erstreckt und die Öffnungen (18) aufweist, die durch sie hindurch gehen und die auf ihrer Länge verteilt sind,
- einer Verriegelungsstange (20), die mit dem Wagen (8) verbunden ist und die von einem elektrischen Schalter (22) gesteuert wird, das sie zwischen einer aktiven Position, in der sie in den Öffnungen (18) der Rippe (16) steckt und einer inaktiven Position, in der sie das Gleiten zwischen dem Wagen (8) und der Schiene (6) erlaubt, verschiebt,
- einem Betätigungsknopf (38), der mit dem Schalter (22) verbunden ist, der dem Benutzer erlauben soll, das Gleiten der Konsole (29 gegenüber der Halterung (10) zuzulassen oder nicht.

3. Vorrichtung nach Anspruch 1 oder Anspruch 2, **dadurch gekennzeichnet, dass** die Mittel zur lösbaren Verbindung bestehen aus:
- Haltefüße (26, 28), die an dem Wagen (8) befestigt sind,
- Ausnehmungen (30), die in der Halterung (10) ausgeführt sind und die Haltefüße (26, 28) aufnehmen sollen,
- einem Riegel (32) der zwischen einer inaktiven Position, in der er eine Zugangsöffnung zu den Ausnehmungen (30) freigibt und einer aktiven Position, in der er die Ausnehmungen (30) abdeckt, um die Haltefüße (26, 28) in den Ausnehmungen (30) festzuhalten, beweglich ist.

4. Vorrichtung nach einem der vorhergehenden Ansprüche, **dadurch gekennzeichnet, dass** die Mittel zur lösbaren Verbindung Steuermittel (36) besitzen, die die Freigabe der Konsole (2) gegenüber der Halterung (10) nur in einer bestimmten Relativposition der Konsole (2) gegenüber der Halterung (10) zulassen.

5. Vorrichtung nach Anspruch 4, **dadurch gekennzeichnet, dass** die Steuermittel (36) der lösbaren Verbindung aus einer Zugschnur (36) bestehen, die unter der Konsole (2) angeordnet ist, solange die Konsole (2) an der Halterung (10) befestigt ist, derart, dass die Zugschnur (36) nur in eine Endgleitposition der Konsole (2) zugänglich ist.

6. Vorrichtung nach einem der vorhergehenden Ansprüche, **dadurch gekennzeichnet, dass** die Schiene (6) aus Aluminium besteht.

7. Vorrichtung nach einem der vorhergehenden Ansprüche, **dadurch gekennzeichnet, dass** die Schiene (6) zwei Längsnuten (12a, 12b) besitzt und der Wagen (8) Rollkörper (14) aufweist, die im inneren der beiden Längsnuten (12a, 12b) angeordnet sind.

## Claims

1. Device (1) in particular for the passenger compartment (5) of a motor vehicle, comprising:
- a central console (2),
- a support (10) intended to be fixed to the passenger compartment (5) of the vehicle,
- guide means (4) comprising a first portion maintained with respect to the central console (2) and a second portion maintained with respect to the support (10), said portions being intended to slide relative to each other and the one defining a rail (6) and the other a carriage (8),
- releasable connection means (26, 28, 30, 32, 34, 36),
said device being **characterised in that**:
- the rail (6) constitutes the first portion of the guide means (4) and it is disposed between the console (2) and the carriage (8) which constitutes the second portion of the guide means (4),
- the releasable connection means (26, 28, 30, 32, 34, 36) are disposed between the carriage (8) and the support (10), and they have an active position in which they maintain the carriage (8) with respect to the support (10) and an inactive position in which they release the assembly (7) formed by the console (2), the rail (6) and the carriage (8) with respect to the support (10),
- the support (10) has a hollow form intended to receive the carriage (8), and
- the device further comprises a flap (46) intended to close off the hollow formed in the support (10) when the assembly (7) formed by the console (2), the rail (6) and the carriage (8) is away from the support (10).

2. Device according to claim 1, **characterised in that** it includes position indexing means for immobilising the console (2), comprising:
- a rib (16) extending along the rail and having openings (18) passing through it which are distributed over its length,
- an indexing rod (20) connected to the carriage (8) and controlled by an electric actuator (22) displacing it between an active position in which it is inserted into the openings (18) of the rib (16) and an inactive position in which it allows sliding between the carriage (8) and the rail (6),
- a control button (38) connected to the actuator (22) and intended to enable the user to allow or prevent sliding of the console (2) with respect to the support (10).

3. Device according to claim 1 or claim 2, **characterised in that** the releasable connection means comprise:
- retaining lugs (26, 28) fixed to the carriage (8),
- seatings (30) provided in the support (10) and intended to receive said retaining lugs (26, 28),
- a sliding bolt (32) movable between an inactive position in which it provides an access opening to the seatings (30) and an active position in which it closes off said seatings (30), in order to retain said retaining lugs (26, 28) in said seatings (30).

4. Device according to any one of the preceding claims, **characterised in that** the releasable connection means comprise control means (36) which permit the release of the console (2) with respect to the support (10) only in a specific relative position of said console (2) with respect to said support (10).

5. Device according to claim 4, **characterised in that** the control means (36) for the releasable connection comprise a pull (36) disposed beneath the console (2) when said console (2) is fixed to the support (10), such that said pull (36) is accessible only in the end sliding position of the console (2).

6. Device according to any one of the preceding claims, **characterised in that** the rail (4) is made of aluminium.

7. Device according to any one of the preceding claims, **characterised in that** the rail (6) comprises two longitudinal grooves (12a, 12b) and the carriage (8) comprises rollers (14) disposed within each longitudinal groove (12a, 12b).
